# EUROPEAN PATENT SPECIFICATION

(11) **EP 2 116 509 B1**
(45) Date of publication and mention of the grant of the patent: **29.08.2012**
(21) Application number: 08720292.5
(22) Date of filing: 28.02.2008
(51) Int. Cl.: C01B 3/38, C01B 3/48, H01M 8/06, H01M 8/04

(54) **HYDROGEN PRODUCING APPARATUS, ITS DRIVING METHOD, AND FUEL-CELL SYSTEM**
VORRICHTUNG ZUR WASSERSTOFFPRODUKTION, ANTRIEBSVERFAHREN DAFÜR UND BRENNSTOFFZELLENSYSTEM DAMIT
APPAREIL DE PRODUCTION D'HYDROGÈNE, SON PROCÉDÉ DE COMMANDE ET SYSTÈME DE PILE À COMBUSTIBLE

(30) Priority: 01.03.2007 JP 2007051004
(43) Date of publication of application: 11.11.2009
(73) Proprietor: Panasonic Corporation, Kadoma-shi Osaka 571-8501 (JP)
(72) Inventor: NAKAMURA, Akinari, Osaka 540-6207 (JP); TAMURA, Yoshio, Osaka 540-6207 (JP); OZEKI, Masataka, Osaka 540-6207 (JP); OHARA, Hideo, Osaka 540-6207 (JP)
(74) Representative: Leinweber & Zimmermann
(86) International application number: PCT/JP2008/000378
(87) International publication number: WO 2008/108069

(56) References cited:
- WO-A1-2006/041185
- DE-A1- 19 941 978
- JP-A- 7 145 928
- JP-A- 05 238 701
- JP-A- 61 265 410
- JP-A- 2001 106 512
- JP-A- 2004 168 630

## Description

### Technical Field

The present invention relates to a hydrogen generator, a method for operating the hydrogen generator, and a fuel cell system. Especially, the present invention relates to a fuel cell system including: a hydrogen generator configured to reform a raw material into a hydrogen-rich hydrogen-containing gas by heating; a combustor configured to combust a combustible gas by utilizing air to heat the hydrogen generator; and a fuel cell configured to generate electric power using the hydrogen-containing gas and an oxidizing gas.

### Background Art

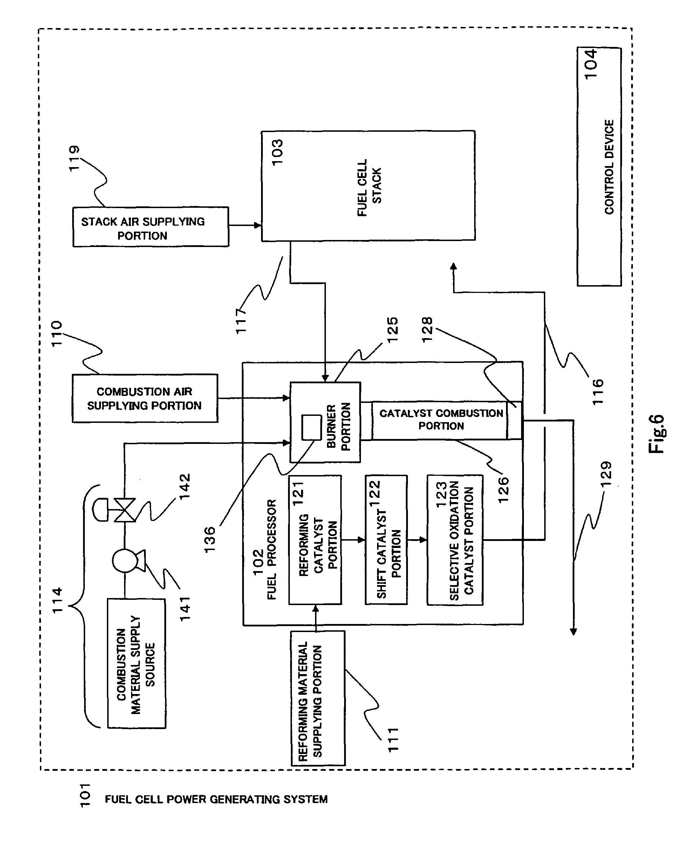

A system shown in Fig. 6 has been provided as a conventional fuel cell system.

A fuel cell system 101 shown in Fig. 6 is configured to include: a fuel processor 102; a fuel cell stack 103 that is a solid polymer electrolyte fuel cell; a control device 104; a reforming material supplying portion 111 configured to supply a reforming material as a hydrocarbon-based fuel; a combustion material supplying portion 114 configured to supply a combustion material as a combustion fuel or a hydrocarbon-based fuel; a combustion air supplying portion 110 configured to supply air as combustion air; a first reformed gas transport line 116 through which a reformed gas is transported; a first off gas transport line 117 through which an off gas is transported as an anode off gas; a stack air supplying portion 119 configured to supply stack air; and a flue gas transport line 129 through which a flue gas is transported. Moreover, the fuel processor 102 includes: a reforming catalyst portion 121 with which a reforming catalyst is filled; a shift catalyst portion 122 with which a shift catalyst for reducing carbon monoxide in the reformed gas by a shift reaction is filled; a selective oxidation catalyst portion 123 with which a selective oxidation catalyst for reducing the carbon monoxide in the reformed gas by a selective oxidation reaction after the shift reaction is filled; a burner portion 125; a flue gas passage 128; a combustion catalyst portion 126 which is disposed in the flue gas passage 128 and with which a combustion catalyst is filled; and an igniter 136 disposed in the burner portion 125 as an ignition device.

Moreover, a combustion material supplied by a combustion material blower 141 is supplied from a combustion material supplying portion 114 to the burner portion 125 at the time of start-up or at the time of combustion aid in a normal operation. A combustion material control valve 142 of the combustion material supplying portion 114 receives a flow rate control signal output from the control device 104, and is controlled such that an opening degree thereof becomes a predetermined opening degree by which a combustion gas flows at a flow rate corresponding to the flow rate control signal (see Patent Document 1 for example).

Then, at the time of ignition, by applying a voltage to generate discharging by the igniter 136, combustion is generated in the burner portion 125 to which the combustion material and the combustion air are supplied.
Patent Document 1: Japanese Laid-Open Patent Application Publication 2004-168630 (pages 6 to 8, Figs. 1 and 2)
Patent Document 2: DE19941978

### Disclosure of the Invention

### Problems to be Solved by the Invention

As described in Patent Document 1, generally used as the reforming material or the combustion material in the fuel cell system 101 is a city gas 13A. The city gas 13A is generally supplied at supply pressure of 1.0 to 2.5 kPa (gage pressure). However, this gage pressure may not be enough in consideration of a pressure loss of entire passages in the configuration of passages of the reforming material and the hydrogen-containing gas obtained by reforming the reforming material or in the configuration of passages of the combustion material. Therefore, after a pressure increasing device, such as a blower, a pump, or the like, increases the pressure of each of the reforming material and the combustion material, the reforming material and the combustion material may be supplied to the reforming catalyst portion 121 and the burner portion 125. Also in the ignition operation, the raw material which is increased in pressure by the pressure increasing device is ignited and combusted in the burner portion 125.

In a case where the same ignition method as a gas water heater is used for the ignition of the burner portion 125 of the fuel cell system 101, the following problems occur. To be specific, in a case where the raw material supplied to the combustion portion is ignited in a state where the opening degree is fixed to a predetermined opening degree corresponding to a target flow rate of the raw material in the ignition operation, a supply flow rate significantly varies due to an individual variability of the accuracy of pressure increase of the pressure increasing device of the fuel cell system 101 and instability of operations of the pressure increasing device at the time of operation start of the pressure increasing device. Especially, in the fuel cell system 101, since the pressure increasing device increases not the pressure of a liquid, such as kerosene, but the pressure of a gas, such as a city gas, the supply flow rate significantly varies. On this account, the problem is that malfunctions may occur, such as: a loud combustion sound of explosive combustion inside the burner portion 125 to which an assumed amount or more of the raw material is supplied; unstable combustion due to high concentration of the raw material; and ignition failure caused since the concentration of the raw material is too high and becomes a combustion upper limit or more.

The present invention was made to solve the above conventional problems, and an object of the present invention is to provide a hydrogen generator configured to improve ignitability of a combustor configured to combust using a raw material increased in pressure by a pressure increasing device, and a fuel cell system using the hydrogen generator.

### Means for Solving the Problems

The above object is achieved by a hydrogen generator according to claim 1.

Moreover, the hydrogen generator of a second invention of the present invention is the hydrogen generator of the first invention of the present invention, and includes the first gas supplying passage through which the gas discharged from the reformer is supplied to the combustor, wherein the controller is configured to, in the ignition operation period of the ignitor, cause the pressure increasing device to operate to supply the material gas through the first gas supplying passage to the combustor.

Moreover, the hydrogen generator of a third invention of the present invention is the hydrogen generator of the first invention of the present invention, wherein the controller causes the opening degree of the flow rate control device to gently increase from the initial opening degree Us.

Moreover, in the hydrogen generator of a fourth invention of the present invention, the controller causes the opening degree of the flow rate control device to increase from the initial opening degree U in a stepwise fashion.

Moreover, the hydrogen generator of a fifth invention of the present invention is the hydrogen generator of the first invention of the present invention, wherein the ignition operation period is a period during which the ignitor continues the ignition operation.

Moreover, the hydrogen generator of a sixth invention of the present invention is the hydrogen generator of the first invention of the present invention, wherein the initial opening degree Us of the flow rate control valve is set such that an amount of the material gas supplied to the combustor with respect to an amount of combustion air supplied to the combustor in the ignition operation period is less than a combustion lower limit of a concentration of the material gas.

Moreover, the hydrogen generator of an eighth invention of the present invention is the hydrogen generator of the first invention of the present invention, wherein in a case where the last opening degree Ue of the flow rate control valve in the previous ignition operation has become the target opening degree Uc, the controller sets the initial opening degree Us of the flow rate control valve in the next ignition operation to the target opening degree Uc, and starts the next ignition operation by the ignitor.

Moreover, a fuel cell system of a ninth invention of the present invention includes: the hydrogen generator according to the first to eighth inventions of the present invention; and a fuel cell configured to generate electric power by using the hydrogen-containing gas generated by the hydrogen generator.

Moreover, a method for operating a hydrogen generator of tenth invention of the present invention is a method according to claim 8

Moreover, the method for operating the hydrogen generator of an eleventh invention of the present invention is the method for operating the hydrogen generator of the tenth invention of the present invention, wherein the opening degree of the flow rate control device is increased from the initial opening degree U in a stepwise fashion.

Moreover, the method for operating the hydrogen generator of a twelfth invention of the present invention is the method for operating the hydrogen generator of the tenth invention of the present invention, wherein the opening degree of the flow rate control device is gently increased from the initial opening degree Us.

Moreover, the method for operating the hydrogen generator of a thirteenth invention of the present invention is the method for operating the hydrogen generator of the ninth invention of the present invention, wherein the initial opening degree Us of the flow rate control valve is set such that an amount of the material gas supplied to the combustor with respect to an amount of combustion air supplied to the combustor in the ignition operation period is less than a combustion lower limit of a concentration of the material gas.

Further, the method for operating the hydrogen generator of the thirteenth invention of the present invention is the method for operating the hydrogen generator of the tenth invention of the present invention, wherein in a case where the last opening degree Ue of the flow rate control valve in the previous ignition operation has become the target opening degree Uc, the initial opening degree Us of the flow rate control valve in the next ignition operation is set to the target opening degree Uc, and the next ignition operation is started by the ignitor.

The above object, other objects, features and advantages of the present invention will be made clear by the following detailed explanation of preferred embodiments with reference to the attached drawings.

### Effects of the Invention

The present invention can provide: a hydrogen generator capable of, even if the accuracy of pressure increase of a pressure increasing device varies, carrying out stable ignition and improving ignitability without causing any problem, such as explosive ignition, unstable combustion, or ignition failure since the concentration of the combustible gas in the combustor is caused to gradually increase from a low concentration at the time of ignition; and a fuel cell system using the hydrogen generator.

### Brief Description of the Drawings

[Fig. 1] Fig. 1 is a configuration diagram of a fuel cell system in Embodiment 1 of the present invention.
[Fig. 2] Fig. 2 is a flow chart of an ignition operation in Embodiment 1 of the present invention.
[Fig. 3] Fig. 3 is a diagram showing a relation between an opening degree of a flow rate control valve and a concentration of a combustible gas in Embodiment 1 of the present invention.
[Fig. 4] Fig. 4 is a configuration diagram of a fuel cell system in Embodiment 2 of the present invention.
[Fig. 5] Fig. 5 is a flow chart showing a control program of the ignition operation in Embodiment 2 of the present invention.
[Fig. 6] Fig. 6 is a configuration diagram of a conventional fuel cell system.
[Fig. 7] Fig. 7 is a configuration diagram of the fuel cell system in Embodiment 3 of the present invention.
[Fig. 8] Fig. 8 is a flow chart showing the control program of the ignition operation in Embodiment 3 of the present invention.

### Explanation of Reference Numbers

- 1: reformer
- 2: burner
- 3: combustion fan
- 4: ignitor
- 5: ignition detector
- 6: fuel cell
- 6a: anode gas passage
- 6b: cathode gas passage
- 7: hydrogen-containing gas supplying passage
- 7a: first hydrogen-containing gas supplying passage
- 7b: second hydrogen-containing gas supplying passage
- 8: anode off gas passage
- 9: transfer valve
- 10: bypass passage
- 11: check valve
- 12: burner shutoff valve
- 13: material gas supplying passage
- 14: material gas supply source valve
- 15: desulfurizer
- 16: flow meter
- 17: pressure increasing device
- 18: flow rate control valve
- 19: material gas shutoff valve
- 20: combustion gas supplying passage
- 21: combustion gas shutoff valve
- 22: air supplying passage
- 23: air blower
- 24: cathode off gas passage
- 25: controller
- 26: valve opening degree adjuster
- 27: Us resetter
- 50: hydrogen generator
- 51: fuel cell system
- 101: fuel cell system
- 102: fuel processor
- 103: fuel cell stack
- 104: control device
- 110: combustion air supplying portion
- 111: reforming material supplying portion
- 114: combustion material supplying portion
- 116: first reformed gas transport line
- 117: first off gas transport line
- 119: stack air supplying portion
- 129: flue gas transport line
- 121: reforming catalyst portion
- 122: shift catalyst portion
- 123: selective oxidation catalyst portion
- 125: burner portion
- 126: combustion catalyst portion
- 128: flue gas passage
- 136: igniter
- 141: blower
- 142: control valve

### Best Mode for Carrying Out the Invention

Hereinafter, embodiments of the present invention will be explained in reference to the drawings. In the drawings, the same reference numbers are used for the same or corresponding components, and a repetition of the same explanation is avoided.

### Embodiment 1

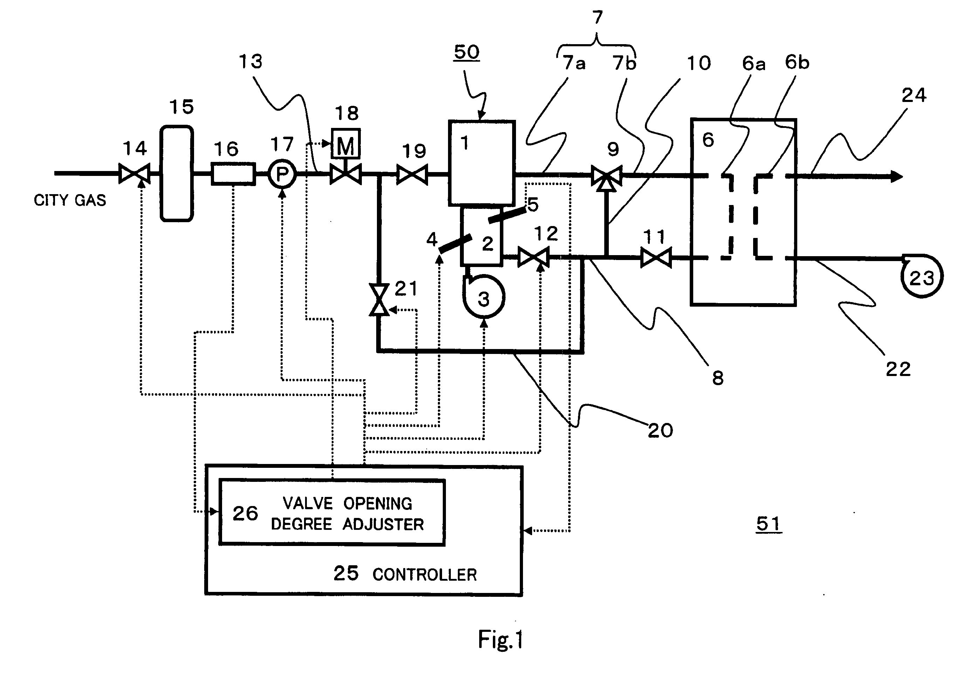

Fig. 1 is a configuration diagram showing a hydrogen generator in Embodiment 1 of the present invention and a fuel cell system including the hydrogen generator.

As shown in Fig. 1, a hydrogen generator 50 in Embodiment 1 includes: a reformer 1 configured to generate a hydrogen-rich hydrogen-containing gas by a steam reforming reaction of a hydrocarbon-based material gas (such as a city gas); a burner (combustor) 2 configured to combust the material gas or a part of the generated hydrogen-containing gas to maintain the temperature of the reformer 1; a combustion fan 3 configured to supply combustion air to the burner 2; an ignitor 4 configured to ignite the material gas or a part of the generated hydrogen-containing gas in the burner 2; and an ignition detector 5 configured to detect the ignition in the burner 2. Herein, a flame rod is used as the ignition detector 5, and is configured to output a detection signal to a below-described the controller 25.

A downstream end of a material gas supplying passage 13 is connected to the reformer 1 of the hydrogen generator 50, and an upstream end thereof is connected to a city gas pipe (not shown). A material gas supply source valve 14, a desulfurizer 15, a flow meter 16, a pressure increasing device 17, a flow rate control valve 18, and a material gas shutoff valve 19 are disposed on the material gas supplying passage 13 in this order from upstream to downstream of the material gas supplying passage 13. The material gas supplying passage 13 supplies the material gas to the reformer 1, the material gas supply source valve 14 allows or blocks the supply of the material gas to the hydrogen generator, the desulfurizer 15 removes a sulfur constituent contained in the material gas, the flow meter 16 detects the flow rate of the material gas supplied to the hydrogen generator, the pressure increasing device 17 increases the pressure of the material gas supplied, the flow rate control valve 18 controls the flow rate of the material gas having been increased in pressure, and the material gas shutoff valve 19 allows or blocks the supply of the material gas to the reformer 1.

Moreover, a combustion gas supplying passage 20 through which the material gas is supplied to the burner 2 branches from the material gas supplying passage 13 extending between the flow rate control valve 18 and the material gas shutoff valve 19, and is connected to the burner 2. A combustion gas shutoff valve 21 configured to allow or block the supply of the material gas is disposed on the combustion gas supplying passage 20.

Further, the hydrogen generator 50 in Embodiment 1 of the present invention includes the controller 25 configured to control a series of steps of an ignition operation of the hydrogen generator 50. The controller 25 is constituted by a computer, such as a microcomputer, and includes: a calculation processing portion, such as a CPU; a storage portion, such as a memory; and a clock portion having a calendar function (all of which are not shown). Moreover, the controller 25 includes a valve opening degree adjuster 26 configured to adjust an opening degree of the flow rate control valve 18 based on a signal output from the flow meter 16. The calculation processing portion reads out and executes a predetermined control program stored in the storage portion to carry out various control operations regarding the hydrogen generator 50. Moreover, the calculation processing portion processes data stored in the storage portion and data input from an operation input portion. Then, the valve opening degree adjuster 26 is realized by a predetermined program stored in the storage portion. In the present embodiment, the controller 25 is configured to also carry out various control operations regarding a fuel cell system 51.

Here, in the present specification, the controller denotes not only a single controller but also a group of a plurality of controllers which execute control operations of the hydrogen generator 50 and the fuel cell system 51 in cooperation with one another. Therefore, the controller 25 does not have to be constituted by a single controller, and may be constituted by a plurality of controllers which are dispersively arranged and control the hydrogen generator 50 and the fuel cell system 51 in cooperation with one another.

To reduce carbon monoxide in the hydrogen-containing gas having flowed through the reformer 1, the hydrogen generator 50 normally includes: a shift converter (not shown) configured to reduce the carbon monoxide by a shift reaction; and a CO remover (not shown) configured to reduce the carbon monoxide by an oxidation reaction.

Moreover, the fuel cell system 51 including the hydrogen generator 50 in Embodiment 1 further includes: a fuel cell 6 configured to generate electric power using hydrogen and oxygen; a hydrogen-containing gas supplying passage 7 through which the hydrogen-rich hydrogen-containing gas generated in the hydrogen generator 50 is supplied to the fuel cell 6; an anode off gas passage 8 through which an anode off gas discharged from the fuel cell 6 is supplied to the burner 2; a bypass passage 10 through which the hydrogen-containing gas discharged from the hydrogen generator 50 is supplied to the anode off gas passage 8 while bypassing the fuel cell 6; a transfer valve 9 configured to switch a destination to which the hydrogen-containing gas is supplied from the hydrogen generator 50, between the fuel cell 6 and the bypass passage 10; a check valve 11 configured to prevent the hydrogen-containing gas, which is supplied through the bypass passage 10 to the anode off gas passage 8 when the transfer valve 9 switches to the bypass passage 10, from flowing backward to the fuel cell 6; and a burner shutoff valve 12 configured to allow or block the supply of the hydrogen-containing gas or the city gas to the burner 2.

Specifically, the hydrogen-containing gas supplying passage 7 includes a first hydrogen-containing gas supplying passage 7a and a second hydrogen-containing gas supplying passage 7b. An upstream end of the first hydrogen-containing gas supplying passage 7a is connected to the hydrogen generator 50, and a downstream end thereof is connected to a first port of the transfer valve 9 constituted by a three-way valve. An upstream end of the second hydrogen-containing gas supplying passage 7b is connected to a third port of the transfer valve 9, and a downstream end thereof is connected to an entrance of an anode gas passage 6a of the fuel cell 6. Moreover, an upstream end of the anode off gas passage 8 is connected to an exit of the anode gas passage 6a, and a downstream end thereof is connected to a portion of the combustion gas supplying passage 20. Meanwhile, an upstream end of the bypass passage 10 is connected to a second port of the transfer valve 9, and a downstream end thereof is connected to a portion of the anode off gas passage 8. Then, the check valve 11 is provided upstream of a connection point where the anode off gas passage 8 and the bypass passage 10 are connected to each other. Moreover, the burner shutoff valve 12 is provided downstream of a connection point where the combustion gas supplying passage 20 and the anode off gas passage 8 are connected to each other.

Moreover, the fuel cell system 51 in Embodiment 1 includes: an air supplying passage 22 through which the air is supplied to the fuel cell 6; an air blower 23 configured to supply the air to the air supplying passage 22 from an outside; and a cathode off gas passage 24 through which remaining air is discharged from the fuel cell 6. Specifically, an upstream end of the air supplying passage 22 is connected to the air blower 23, and a downstream end thereof is connected to an entrance of a cathode gas passage 6b. Moreover, an upstream end of the cathode off gas passage 24 is connected to an exit of the cathode gas passage 6b, and a downstream end thereof is open to the atmosphere.

Next, the operations of the hydrogen generator 50 in Embodiment 1 and the operations of the fuel cell system 51 including the hydrogen generator 50 will be explained in reference to Fig. 1.

First, when the hydrogen generator 50 starts operating, the material gas supply source valve 14, the combustion gas shutoff valve 21, and the burner shutoff valve 12 are open, the check valve 11 and the material gas shutoff valve 19 are closed, and the ignitor 4 and the pressure increasing device 17 are activated. Simultaneously, by appropriately controlling the flow rate control valve 18 and the combustion fan 3 by the controller 25, a combustion material gas is supplied through the combustion gas supplying passage 20 to the burner 2, and combustion air is supplied from the combustion fan 3 to the burner 2. Next, the controller 25 causes the ignitor 4 to be activated to carry out the ignition of the burner 2. The ignition of the burner 2 will be described in detail below

Next, after the ignition of the burner 2 is completed, the controller 25 causes the material gas shutoff valve 19 to open to supply the material gas to the reformer 1. The material gas supplied to the reformer 1 is subjected to the reforming reaction with the steam at high temperature. Thus, the hydrogen-rich hydrogen-containing gas is generated. Simultaneously, the carbon monoxide contained in the hydrogen-containing gas supplied from the reformer 1 is removed by using the shift converter (not shown) and the CO remover (not shown) such that the concentration of the carbon monoxide in the hydrogen-containing gas is reduced to a level that the hydrogen-containing gas does not damage the catalyst of the fuel cell 6.

In the fuel cell system 51, in a case where the hydrogen-containing gas contains a large amount of carbon monoxide, such as a case where the reformer 1 has just been started up, the first port and second port of the transfer valve 9 are communicated with each other and the third port thereof is closed to cause the first hydrogen-containing gas supplying passage 7a and the bypass passage 10 to be communicated with each other. With this, the gas supplied from the hydrogen generator 50 to the first hydrogen-containing gas supplying passage 7a is discharged through the bypass passage 10 to the anode off gas passage 8. At this time, the check valve 11 is closed to prevent the hydrogen-containing gas from flowing backward to the fuel cell 6. The hydrogen-containing gas discharged to the anode off gas passage 8 flows through the combustion gas supplying passage 20 to be supplied to the burner 2 configured to maintain the reformer 1 at high temperature, and be used as a combustion gas.

Then, in a case where the concentration of the carbon monoxide in the hydrogen-containing gas is adequately reduced, the first port and third port of the transfer valve 9 are communicated with each other and the second port thereof is closed to cause the first hydrogen-containing gas supplying passage 7a and the second hydrogen-containing gas supplying passage 7b to be communicated with each other, and the check valve 11 is open. With this, the hydrogen-containing gas generated in the hydrogen generator 50 is supplied through the hydrogen-containing gas supplying passage 7 to the fuel cell 6 (to be precise, the anode gas passage 6a). Moreover, the air is supplied from the air blower 23 through the air supplying passage 22 to the fuel cell 6 (to be precise, the cathode gas passage 6b). Then, the hydrogen-containing gas supplied to the fuel cell 6 is supplied through the anode gas passage 6a to an anode, and the air supplied to the fuel cell 6 is supplied through the cathode gas passage 6b to a cathode. Thus, the electric power is generated by an electrochemical reaction. Then, a mixture gas of hydrogen, steam, carbon dioxide, and carbon monoxide unconsumed in the electric power generation is discharged from the exit of the anode gas passage 6a of the fuel cell 6 to the anode off gas passage 8. The hydrogen-containing gas discharged to the anode off gas passage 8 is supplied to the burner 2 configured to maintain the reformer 1 at high temperature, and is used as a combustion fuel. Similarly, a mixture gas of the air unconsumed in the electric power generation and the steam generated in the electric power generation is discharged from the exit of the cathode gas passage 6b of the fuel cell 6 to the cathode off gas passage 24. The mixture gas discharged to the cathode off gas passage 24 is released to the atmosphere. In an operation process of the hydrogen generator 50, the supply of the combustion material gas through the combustion gas supplying passage 20 may be stopped after the hydrogen-containing gas discharged from the reformer 1 is supplied to the burner 2.

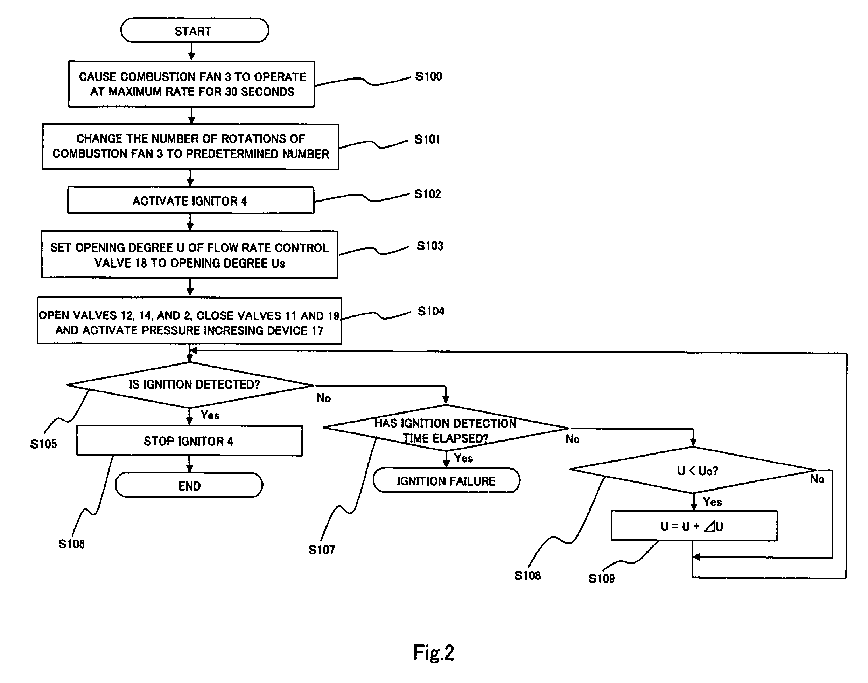

Next, the ignition operation in the hydrogen generator 50 in Embodiment 1 and the fuel cell system 51 including the hydrogen generator 50 will be explained in reference to a flow chart of a control program of the ignition operation shown in Fig. 2.

When a control operation for the ignition operation starts, the controller 25 first causes the combustion fan 3 to operate at maximum rate for 30 seconds (Step S100). With this, the burner 2 and a combustion gas passage (not shown) located downstream of the burner 2 are pre-purged by the air, the inside of the burner 2 is maintained at a constant state to secure a state suitable for ignition and combustion. Next, the controller 25 adjusts the number of rotations of the combustion fan 3 to a predetermined optimal number suitable for the ignition (Step S101), and causes the ignitor 4 to be activated (Step S102). An opening degree U of the flow rate control valve 18 is adjusted to an initial opening degree Us by the valve opening degree adjuster 26 provided inside the controller 25 (Step S103). Then, the controller 25 causes the burner shutoff valve 12, the material gas supply source valve 14, and the combustion gas shutoff valve 21 to open, causes the check valve 11 and the material gas shutoff valve 19 to close, and causes the pressure increasing device 17 to be activated (Step S104) to carry out the ignition operation.

Next, the controller 25 causes the ignition detector 5 to detect whether or not the ignition has occurred (Step S105). When the ignition detector 5 detects the ignition, the controller 25 causes the ignitor 4 to stop (Step S106) to complete the ignition operation. The initial opening degree Us of the flow rate control valve 18 denotes an opening degree adjusted by the valve opening degree adjuster 26, i.e., an opening degree initially adjusted from the opening degree of 0% by the valve opening degree adjuster 26 in Step S103. Moreover, to prevent the generation of a loud combustion sound of explosive combustion, the initial opening degree Us is preferably set such that the concentration of the material gas (concentration of the material gas in the mixture gas of the material gas and the combustion air; hereinafter may be referred to as "material gas concentration") becomes a value smaller than a combustion lower limit. For example, even if the accuracy of pressure increase of the pressure increasing device varies, U_{L}/2 (U_{L} denotes the opening degree of the flow rate control valve 18 which is set such that the material gas corresponding to the combustion lower limit with respect to the amount of air supplied from the combustion fan 3 to the burner 2 in the ignition operation flows) or lower is preferable in order to prevent the generation of the loud combustion sound of the explosive combustion.
Meanwhile, when the ignition is not detected in Step S105, the controller 25 determines whether or not a detection time for the detection of the ignition has elapsed (Step S107). When the controller 25 determines that the detection time has elapsed, it determines that the ignition is failed, and causes the ignitor 4 to stop operating and terminates the ignition operation (Step S110).

Moreover, when the controller 25 determines in Step S107 that the detection time has not yet elapsed, the opening degree U of the flow rate control valve 18 is gradually increased by the valve opening degree adjuster 26 from the initial opening degree Us to a target opening degree Uc corresponding to a target material flow rate in an ignition operation period. To be specific, the valve opening degree adjuster 26 of the controller 25 determines whether or not the opening degree U of the flow rate control valve 18 is smaller than the target opening degree Uc (Step S108). When the opening degree U is smaller than the target opening degree Uc, it is increased by ΔU (Step S109). When the opening degree U is larger than the target opening degree Uc, it is not increased.

Specifically, the valve opening degree adjuster 26 of the controller 25 obtains from the flow meter 16 the flow rate of the material gas supplied through the material gas supplying passage 13 and the combustion gas supplying passage 20 to the burner 2, and increases the opening degree U of the flow rate control valve 18 by ΔU increments such that the above flow rate of the material gas becomes the target material flow rate in the ignition operation period. Although the above increased amount ΔU of the opening degree U depends on the initial opening degree Us, it is preferably small to, for example, prevent the generation of the loud combustion sound of the explosive combustion. For example, in order that the time to ignition can be set within the ignition operation period, the increased amount ΔU in one step is preferably larger than (U_{L}-U_{S}/T)×ΔT. Moreover, in order to prevent the generation of the loud combustion sound of the explosive combustion, the increased amount ΔU in one step is preferably smaller than (Uₘ-U_{S}/T)×ΔT (Uₘ denotes the opening degree of the flow rate control valve 18 which is set such that the material gas corresponding to the combustion lower limit with respect to the amount of air supplied from the combustion fan 3 to the burner 2 in the ignition operation flows, T denotes an ignition operation time, and ΔT denotes a time interval of one step). Moreover, the increased amount ΔU of the opening degree U may be constant, or the increased amount ΔU of the opening degree U may change depending on a control signal output from the valve opening degree adjuster 26 of the controller 25 to the flow rate control valve 18. Herein, the opening degree of the flow rate control valve 18 is increased from the initial opening degree Us by ΔU increments in a stepwise fashion. However, the present embodiment is not limited to this. The opening degree of the flow rate control valve 18 may be continuously increased as long as it is gently increased from the initial opening degree Us to the target opening degree Uc.

Then, after the opening degree U of the flow rate control valve 18 is determined in Step S108 and then adjusted in Step S109, the process returns to Step S105, and the detection of the ignition is repeated by using the ignition detector 5. The target material flow rate in the ignition operation period corresponds to the material flow rate by which the concentration of the material gas in the burner 2 may fall within a combustion range, and the ignition may be surely carried out. In the present embodiment, the target material flow rate is set to 1.5 L. Moreover, in Embodiment 1, a group of the combustion gas supplying passage 20 and the anode off gas passage 8 corresponds to a second gas supplying passage of the present invention. However, this is just one example, and the present embodiment is not limited to this. Further, in a case where the opening degree U of the flow rate control valve 18 has not yet reached the target opening degree Uc after the material gas is ignited in the burner 2 by the ignition operation, the valve opening degree adjuster 26 adjusts the opening degree U of the flow rate control valve 18 to the target opening degree Uc.

Next, operational advantages of the hydrogen generator 50 in the present embodiment and the fuel cell system 51 including the hydrogen generator 50 will be explained.

In a case where the raw material is supplied and ignited in the ignition operation period while fixing the opening degree corresponding to the target material flow rate as in the case of the conventional gas water heater, the flow rate of the material gas supplied to the burner 2 significantly varies due to the individual variability of the accuracy of pressure increase of the pressure increasing device 17. As a result, by supplying a larger amount of the material gas than an assumed amount, malfunctions may occur, such as the loud combustion sound of the explosive combustion, unstable combustion due to high concentration of the raw material, and an ignition failure caused since the concentration of the raw material is too high and becomes a combustion upper limit or more. However, these problems can be solved by carrying out the ignition operation of the hydrogen generator 50 in Embodiment 1 and the fuel cell system 51 including the hydrogen generator 50.

To be specific, with the ignitor 4 activated, the opening degree U of the flow rate control valve 18 is controlled to be gradually increased from the initial opening degree Us, which realizes the low flow rate of the material gas, to the target opening degree Uc which corresponds to the target material flow rate in the ignition operation period and is larger than the initial opening degree Us. With this, the flow rate of the material gas is gradually increased, and this can gradually increase a combustible gas concentration in the burner 2 from the low concentration. Therefore, even if the flow rate of the raw material varies due to the individual variability of the accuracy of pressure increase of the pressure increasing device 17, the ignition can be carried out from an air-rich low-concentration side. On this account, the safe and stable ignition operation can be realized without causing the loud combustion sound of the explosive combustion, the unstable combustion, the ignition failure, or the like.

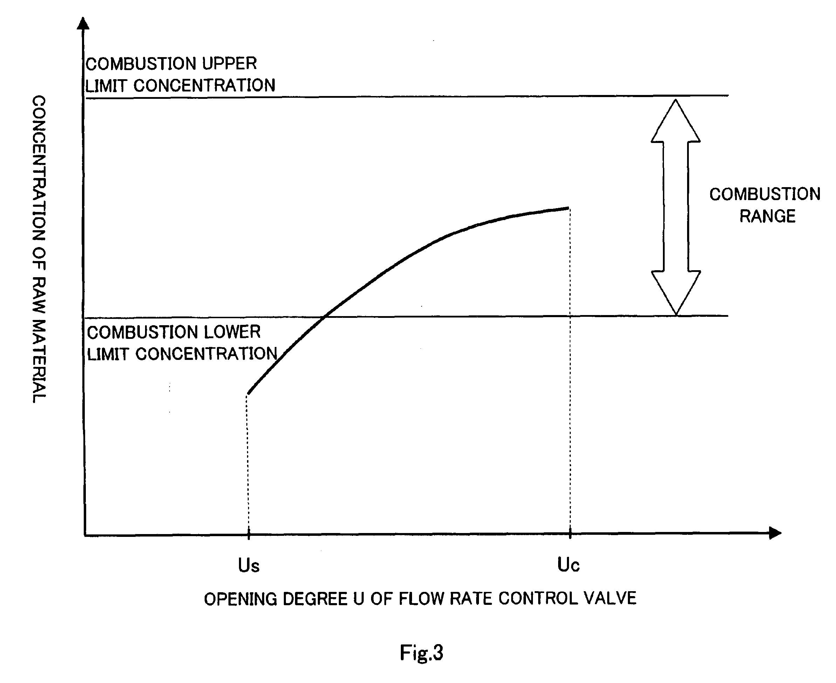

As shown in Fig. 3, in a case where the initial opening degree Us is set such that the amount of the material gas with respect to the amount of the combustion air in the burner 2 is less than the combustion lower limit of the material gas concentration, "safe state which does not cause the explosive combustion" in which the material gas concentration is low can be realized in an initial period of the ignition operation. From this state, the material gas concentration can be gradually increased to reach the combustion range, and the ignition can be carried out. As a result, the safer ignition operation can be realized, so that this is useful.

Moreover, in the present embodiment, the combustion material gas is supplied "through the combustion gas supplying passage 20" at the time of the ignition. However, the material gas may be supplied in the following manner. To be specific, in the ignition operation period, the material gas supply source valve 14, the burner shutoff valve 12, and the material gas shutoff valve 19 are open, the check valve 11 and the combustion gas shutoff valve 21 are closed, and the first port and second port of the transfer valve 9 are communicated with each other and the third port thereof is closed to cause the first hydrogen-containing gas passage 7a and the bypass passage 10 to be communicated with each other. Then, the ignitor 4 and the pressure increasing device 17 are activated. Simultaneously, the flow rate control valve 18 and the combustion fan 3 are appropriately controlled by the controller 25 to supply the material gas from the reformer 1 through the hydrogen-containing gas supplying passage 7, the transfer valve 9, the bypass passage 10, the anode off gas passage 8, and the combustion gas supplying passage 20 to the burner 2 and supply the combustion air to the burner 2. Thus, the ignition may be carried out in the burner 2. In this case, the passage extending from the exit of the reformer 1 to the burner 2, i.e., a group of the hydrogen-containing gas supplying passage 7 (to be precise, the first hydrogen-containing gas supplying passage 7a), the bypass passage 10, the anode off gas passage 8, and the combustion gas supplying passage 20 corresponds to a first gas supplying passage of the present invention. However, this is just one example, and the first gas supplying passage of the present invention is not limited to this and may be the passage extending from the exit of the reformer 1 through the fuel cell 6 to combustor 2, i.e., a group of the hydrogen-containing gas supplying passage 7, the anode gas passage 6a in the fuel cell, the anode off gas passage 8, and the combustion gas supplying passage 20.

### Embodiment 2

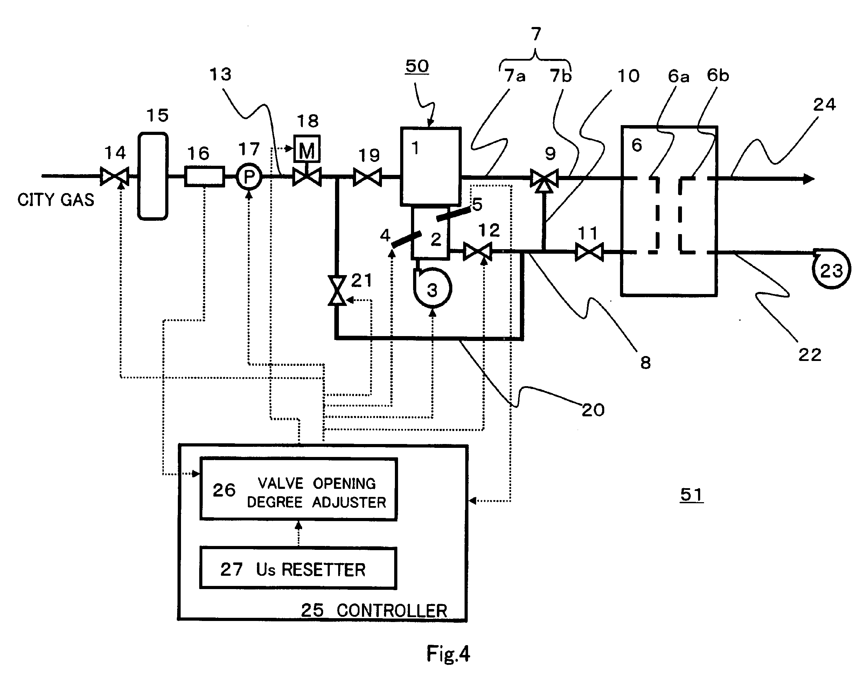

Fig. 4 is a configuration diagram showing the hydrogen generator in Embodiment 2 of the present invention and the fuel cell system including the hydrogen generator. In Fig. 4, the same reference numbers are used for the same components as in Fig. 1, and explanations thereof are omitted.

As shown in Fig. 4, the hydrogen generator 50 in Embodiment 2 and the fuel cell system 51 including the hydrogen generator 50 correspond to the hydrogen generator 50 in Embodiment 1 and the fuel cell system 51 including the hydrogen generator 50 but further include a Us resetter 27 configured to, when the ignition is failed in the ignition operation period, set the initial opening degree Us in the next ignition operation to a last opening degree Ue in the previous ignition operation period. The Us resetter 27 is realized by a predetermined program stored in the storage portion of the controller 25.

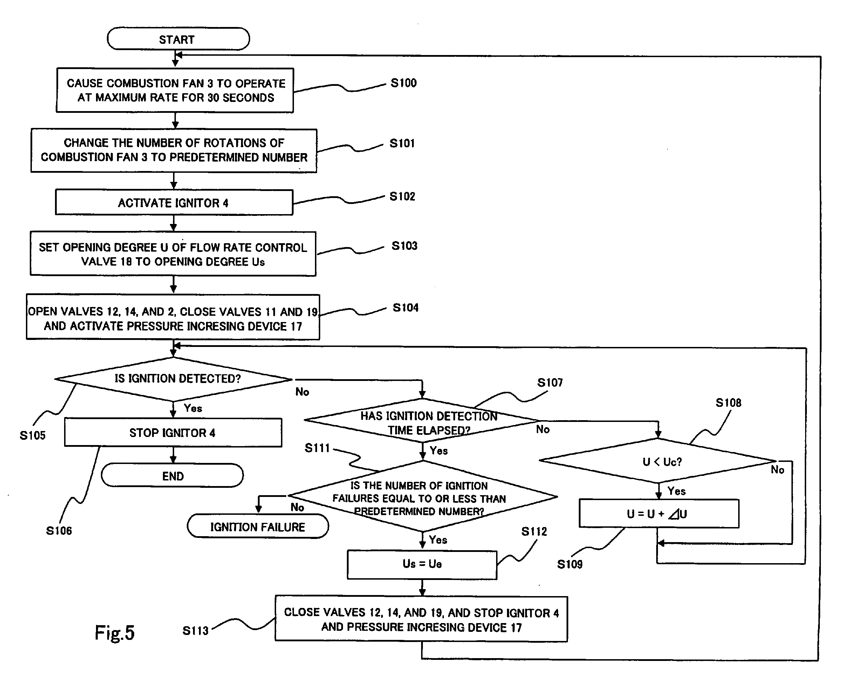

Next, the ignition operation of the hydrogen generator 50 in Embodiment 2 and the fuel cell system 51 including the hydrogen generator 50 will be explained in reference to the flow chart of the ignition operation shown in Fig. 5.

When the ignition operation starts, the controller 25 first causes the combustion fan 3 to operate at maximum rate for 30 seconds (Step S100). With this, the burner 2 and the combustion gas passage (not shown) located downstream of the burner 2 are pre-purged by the air. Next, the controller 25 adjusts the number of rotations of the combustion fan 3 to a predetermined optimal number suitable for the ignition (Step S101), and causes the ignitor 4 to be activated (Step S102). The opening degree U of the flow rate control valve 18 is adjusted to the initial opening degree Us by the valve opening degree adjuster 26 provided inside the controller 25 (Step S103). Then, the controller 25 causes the burner shutoff valve 12, the material gas supply source valve 14, and the combustion gas shutoff valve 21 to open, causes the check valve 11 and the material gas shutoff valve 19 to close, and causes the pressure increasing device 17 to be activated (Step S104) to carry out the ignition operation. Next, the controller 25 causes the ignition detector 5 to detect whether or not the ignition has occurred (Step S105). When the ignition detector 5 detects the ignition, the controller 25 causes the ignitor 4 to stop (Step S106) to complete the ignition operation.

In contrast, when the ignition cannot be detected in Step S105, the controller 25 determines whether or not an ignition detection time for the detection of the ignition has elapsed (Step S107). When the controller 25 determines that the ignition detection time has not yet elapsed, the opening degree U of the flow rate control valve 18 is gradually increased by the valve opening degree adjuster 26 from the initial opening degree Us to the target opening degree Uc corresponding to the target material flow rate in the ignition operation period. To be specific, the valve opening degree adjuster 26 of the controller 25 determines whether or not the opening degree U of the flow rate control valve 18 is smaller than the target opening degree Uc (Step S108). When the opening degree U is smaller than the target opening degree Uc, it is increased by ΔU (Step S109). When the opening degree U is larger than the target opening degree Uc, it is not increased.

Then, after the opening degree U of the flow rate control valve 18 is determined in Step S108 and adjusted in Step S109, the process returns to Step S105, and the detection of the ignition is repeated by using the ignition detector 5.

In contrast, when the controller 25 determines that the ignition detection time has elapsed in Step S107, it determines whether or not the number of ignition failures is a predetermined number (four for example) or less (Step S111). When the number of ignition failures is the predetermined number or less, the initial opening degree Us is set by the Us resetter 27 to the last opening degree Ue of the flow rate control valve 18 in the previous ignition operation (Step S112). For example, in a case where the ignition operation is carried out three times (in a case where the number of ignition failures is three), the initial opening degree Us in the fourth ignition operation is set to the opening degree Ue of the flow rate control valve 18 at the time of termination of the third ignition operation period.

Next, the controller 25 causes the burner shutoff valve 12, the material gas supply source valve 14, and the material gas shutoff valve 19 to close and causes the ignitor 4 and the pressure increasing device 17 to stop (Step S113). Then, the process returns to Step S100, and the ignition operation is repeated until the number of ignition failures reaches the predetermined number (four for example) in the determination of Step S111. When the number of ignition failures reaches the predetermined number (four for example) in Step S111, the ignition is finally failed, the ignitor 4 stops operating, and the ignition operation terminates. Moreover, when the ignition is detected in Step S105, the ignitor 4 stops operating, and the ignition operation terminates.

In the present embodiment, the initial opening degree Us and the increased amount ΔU of the opening degree U may be adjusted such that the opening degree U of the flow rate control valve 18 becomes the target opening degree Uc in the first ignition operation period as in Embodiment 1. Moreover, the initial opening degree Us and the increased amount ΔU of the opening degree U may be adjusted such that the opening degree U of the flow rate control valve 18 becomes the target opening degree Uc in the second or latter ignition operation period.

Moreover, in a case where the ignition is failed although the opening degree U of the flow rate control valve 18 has become the target opening degree Uc, and the number of ignition failures has not yet reached the predetermined number (the number of ignition failures is the predetermined number or less), the Us resetter 27 of the controller 25 may set the initial opening degree Us in the next ignition operation period to the target opening degree Uc.

Next, operational advantages of the hydrogen generator 50 in Embodiment 2 and the fuel cell system 51 including the hydrogen generator 50 will be explained.

In the case of the configuration of the hydrogen generator 50 in Embodiment 2 and the configuration of the fuel cell system 51 including the hydrogen generator 50, "the safe and stable ignition operation can be realized without causing the loud ignition sound of the explosive ignition, the unstable combustion, the ignition failure, or the like" which is explained in Embodiment 1, and the ignition can be surely carried out by performing the ignition operation of the flow chart shown in Fig. 5 in a re-ignition operation performed after the ignition is failed.

To be specific, when the ignition detection time has not yet elapsed in Step S107, the operation explained in Embodiment 1 is carried out. With this, the combustible gas (material gas) concentration in the burner 2 is gradually increased from the low concentration, so that the safe and stable ignition operation can be realized. Further, when the ignition detection time has elapsed in Step S107 although the ignition has not yet occurred, and the number of ignition failures is the predetermined number or less, the last opening degree Ue (target opening degree Us when the opening degree has reached the target opening degree Us) of the flow rate control valve 18 in the ignition operation period is reset to the initial opening degree Us of the flow rate control valve in the ignition operation period at the time of the re-ignition operation, and then the re-ignition operation is carried out.

As described above, in Embodiment 2, the combustible gas concentration in the burner 2 is gradually increased from the low concentration. Therefore, the reason why the ignition does not succeed even by setting the opening degree of the flow rate control valve 18 to the last opening degree Ue may be not because the combustible gas concentration in the burner 2 exceeds the combustion upper limit concentration by the material gas flow rate corresponding to the opening degree Ue but because the combustible gas concentration is lower than the combustion lower limit concentration. Therefore, in Embodiment 2, by gradually increasing the combustible gas concentration which is higher than the initial combustible gas concentration in the burner 2 at the time of the previous ignition operation, the ignitability in the burner 2 improves as compared to the previous ignition operation, and the more secure re-ignition operation can be realized.

In Embodiments 1 and 2, the downstream end of the combustion gas supplying passage 20 is connected to a portion of the anode off gas passage 8. However, the present invention is not limited to this. For example, the downstream end of the combustion gas supplying passage 20 may be connected to a portion of the second hydrogen-containing gas supplying passage 7b of the hydrogen-containing gas supplying passage 7. In this case, by causing the third port and second port of the transfer valve 9 to be communicated with each other and closing the first port thereof, the material gas can be supplied from the combustion gas supplying passage 20 through the bypass passage 10 to the burner 2.

### Embodiment 3

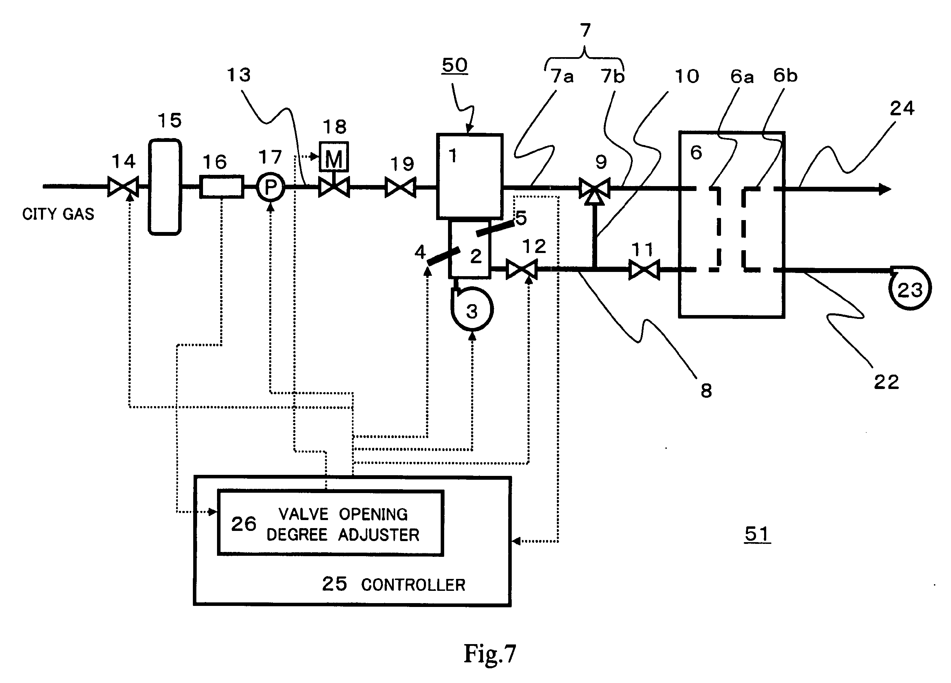

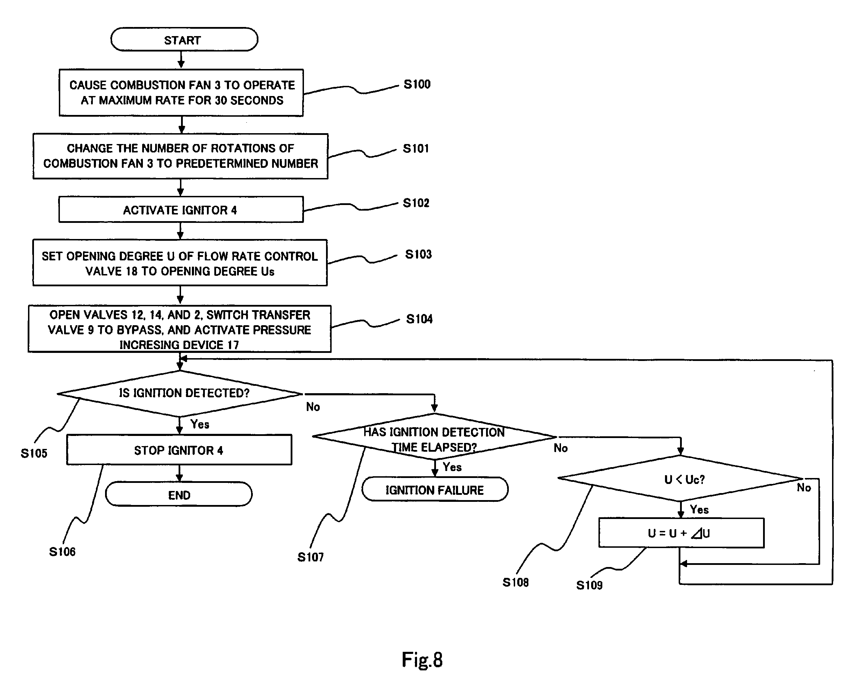

Fig. 7 is a configuration diagram showing the hydrogen generator in Embodiment 3 of the present invention and the fuel cell system including the hydrogen generator. Fig. 8 is a flow chart of the ignition operation of the hydrogen generator in Embodiment 3 of the present invention and the fuel cell system including the hydrogen generator.

As shown in Fig. 7, the hydrogen generator 50 in Embodiment 3 of the present invention and the fuel cell system 51 including the hydrogen generator 50, and the hydrogen generator 50 in Embodiment 1 of the present invention and the fuel cell system 51 including the hydrogen generator 50 are the same in basic configuration as each other, but are different from each other in that the combustion gas supplying passage 20 and the combustion gas shutoff valve 21 are not provided. In addition, these are different from each other in that: the downstream end of the anode off gas passage 8 is connected to the burner 2; and the burner shutoff valve 12 is provided downstream of the connection point where the anode off gas passage 8 and the bypass passage 10 are connected to each other.

Further, as shown in Fig. 8, how to control the valves by the controller 25 in Step S104 is different. Specifically, the controller 25 carries out the ignition operation by causing the burner shutoff valve 12, the material gas supply source valve 14, and the material gas shutoff valve 19 to open, causing the first port and second port of the transfer valve 9 to be communicated with each other, causing the third port thereof to close, and causing the pressure increasing device 17 to be activated.

With this, in the fuel cell system 51 in Embodiment 3, the material gas is supplied through the material gas supplying passage 13, the hydrogen generator 50, the first hydrogen-containing gas supplying passage 7a, the bypass passage 10, and the anode off gas passage 8 to the burner 2.

The hydrogen generator 50 in Embodiment 3 configured as above and the fuel cell system 51 including the hydrogen generator 50 have the same operational advantages as those in Embodiment 1, and further have the following operational advantages.

To be specific, in a case where the material gas having flowed through the hydrogen generator 50 is supplied to the burner 2 as in the fuel cell system 51 of Embodiment 3, the combustion gas having been combusted in the burner 2 increases the temperature of the gas, such as the material gas, flowing through the reformer 1 (including the shift converter and the CO remover, not shown) of the hydrogen generator 2, in the ignition operation period from when the initial ignition is carried out in the burner 2 to when the ignition detector 5 detects a stable ignition combustion state. Therefore, the volume flow rate of the material gas flowing through the first hydrogen-containing gas supplying passage 7a, the bypass passage 10, and the anode off gas passage 8, which are located downstream of the hydrogen generator 50, increases.

Meanwhile, in a case where the opening degree of the flow rate control valve 18 is adjusted as with the ignition method of the generally disclosed gas water heater such that the flow rate of the raw material supplied to the burner 2 becomes the target material flow rate, the material gas, the flow rate of which is the target flow rate or higher, is supplied to the burner 2 due to the increase in the volume flow rate of the material gas flowing through the first hydrogen-containing gas supplying passage 7a, the bypass passage 10, and the anode off gas passage 8. If the ignition operation is caused to continue in a state where the material gas, the flow rate of which is the target flow rate or more, especially an assumed flow rate or more, is supplied to the burner 2, malfunctions may occur, such as the loud combustion sound of the explosive combustion in the burner 2, the unstable combustion due to high material gas concentration, and the ignition failure caused since the material gas concentration has become the combustion upper limit or more.

However, in the fuel cell system 51 of Embodiment 3, the opening degree U of the flow rate control valve 18 is controlled such that the material gas concentration in the burner 2 gradually increases from the low concentration. Therefore, it is possible to prevent the material gas, the amount of which is an assumed amount or more, from being supplied to the burner 2, and also possible to prevent the malfunctions, such as the loud combustion sound of the explosive combustion in the burner 2, the unstable combustion due to high material gas concentration, and the ignition failure caused since the material gas concentration has become the combustion upper limit or more.

The configuration in Embodiment 3 is the same as that in Embodiment 1. However, the present embodiment is not limited to this. As explained in Embodiment 2, Embodiment 3 may be configured such that the controller 25 is provided with the Us resetter 27, the number of ignition failures is set, and the ignition operation is carried out plural times.

### Industrial Applicability

The present invention has an effect of being able to improve the ignitability of the combustor configured to combust using the raw material increased in pressure by the pressure increasing device. The present invention is useful as, for example, a hydrogen generator having a combustor configured to combust using a material gas increased in pressure, and a domestic fuel cell system including the hydrogen generator.

## Claims

1. A hydrogen generator comprising: a reformer (1) configured to generate a hydrogen-containing gas from a material gas by a reforming reaction; a combustor (2) configured to heat the reformer; a first gas supplying passage (10) through which a gas discharged from the reformer is supplied to the combustor or a second gas supplying passage (20) through which the material gas is supplied to the combustor; an ignitor (4) configured to carry out an ignition operation in the combustor;
a flow rate control valve (18) configured to control a flow rate of the material gas supplied to the reformer or the combustor; and a controller (25),
**characterized in that**
the hydrogen generator comprises a pressure increasing device (17) configured to increase pressure of the material gas supplied to the reformer or the combustor;
and
the controller (25) is configured to, in an ignition operation period that is a period during which the ignitor (4) continues the ignition operation, cause the pressure increasing device (17) to operate to supply the material gas through the first gas supplying passage (10) or the second gas supplying passage (20) to the combustor (2), and cause an opening degree of the flow rate control valve (18) to increase from an initial opening degree Us to a target opening degree Uc corresponding to a target material flow rate in the ignition operation period, the initial opening degree Us being smaller than the target opening degree Uc, and
in a case where ignition has not occurred by the ignition operation in the ignition operation period, and a next ignition operation is carried out, the controller (25) is configured to set the initial opening degree Us of the flow rate control valve (18) in the next ignition operation to a last opening degree Ue of the flow rate control valve in a previous ignition operation period, and starts the next ignition operation by the ignitor (4).

2. The hydrogen generator according to claim 1, comprising the first gas supplying passage (10) through which the gas discharged from the reformer (1) is supplied to the combustor (2), wherein
the controller (25) is configured to, in the ignition operation period of the ignitor (4), cause the pressure increasing device (17) to operate to supply the material gas through the first gas supplying passage (10) to the combustor (2).

3. The hydrogen generator according to claim 1, wherein the controller (25) causes the opening degree of the flow rate control valve (18) to gradually increase from the initial opening degree Us.

4. The hydrogen generator according to claim 1, wherein the controller (25) causes the opening degree of the flow rate control valve (18) to increase from the initial opening degree Us in a stepwise fashion.

5. The hydrogen generator according to claim 1, wherein the initial opening degree Us of the flow rate control valve (18) is set such that an amount of the material gas supplied to the combustor (2) with respect to an amount of combustion air supplied to the combustor in the ignition operation period is less than a combustion lower limit of a concentration of the material gas.

6. The hydrogen generator according to claim 1, wherein in a case where the last opening degree Ue of the flow rate control valve (18) in the previous ignition operation has become the target opening degree Uc, the controller (25) sets the initial opening degree Us of the flow rate control valve in the next ignition operation to the target opening degree Uc, and starts the next ignition operation by the ignitor (4).

7. A fuel cell system comprising: the hydrogen generator according to any one of claims 1 to 6; and a fuel cell (6) configured to generate electric power by using the hydrogen-containing gas generated by the hydrogen generator.

8. A method for operating a hydrogen generator comprising: a reformer (1) configured to generate a hydrogen-containing gas from a material gas by a reforming reaction; a combustor (2) configured to heat the reformer; a first gas supplying passage (10) through which a gas discharged from the reformer is supplied to the combustor or a second gas supplying passage (20) through which the material gas is supplied to the combustor; an ignitor (4) configured to carry out an ignition operation in the combustor; a pressure increasing device (17) configured to increase pressure of the material gas supplied to the reformer or the combustor; and a flow rate control valve (18) configured to control a flow rate of the material gas supplied to the reformer or the combustor, wherein
in an ignition operation period that is a period during which the ignitor (4) continues the ignition operation, the pressure increasing device (18) is caused to operate to supply the material gas through the first gas supplying passage (10) or the second gas supplying passage (20) to the combustor (2), and an opening degree of the flow rate control valve (18) is caused to increase from an initial opening degree Us to a target opening degree Uc corresponding to a target material flow rate in the ignition operation period, the initial opening degree Us being smaller than the target opening degree Uc, and
in a case where ignition has not occurred by the ignition operation in the ignition operation period, and a next ignition operation is carried out, the initial opening degree Us of the flow rate control valve in the next ignition operation is set to a last opening degree Ue of the flow rate control valve (18) in a previous ignition operation period, and the next ignition operation is started by the ignitor (4).

9. The method according to claim 8, wherein the opening degree of the flow rate control valve (18) is gradually increased from the initial opening degree Us.

10. The method according to claim 8, wherein the opening degree of the flow rate control valve (18) is increased from the initial opening degree U in a stepwise fashion.

11. The method according to claim 8, wherein the initial opening degree Us of the flow rate control valve (18) is set such that an amount of the material gas supplied to the combustor (2) with respect to an amount of combustion air supplied to the combustor in the ignition operation period is less than a combustion lower limit of a concentration of the material gas.

12. The method according to claim 8, wherein in a case where the last opening degree Ue of the flow rate control valve (18) in the previous ignition operation has become the target opening degree Uc, the initial opening degree Us of the flow rate control valve in the next ignition operation is set to the target opening degree Uc, and the next ignition operation is started by the ignitor (4).

## Patentansprüche

1. Wasserstoffgenerator, umfassend: einen Reformer (1), der ausgebildet ist, um ein wasserstoffhaltiges Gas aus einem Materialgas durch eine Reformierungsreaktion zu erzeugen; einen Brenner (2), der ausgebildet ist, um den Reformer zu beheizen; eine erste Gaszuführung (10), durch die ein aus dem Reformer abgelassenes Gas dem Brenner zugeführt wird, oder eine zweite Gaszuführung (20), durch die das Materialgas dem Brenner zugeführt wird; einen Zünder (4), der ausgebildet ist, um einen Zündvorgang im Brenner auszuführen;
ein Volumenstromsteuer- bzw. -regelventil (18), das ausgebildet ist, um einen Volumenstrom des dem Reformer oder dem Brenner zugeführten Materialgases zu steuern bzw. zu regeln; und einen Controller (25),
**dadurch gekennzeichnet, dass**
der Wasserstoffgenerator eine Druckerhöhungseinrichtung (17) umfasst, die ausgebildet ist, um Druck des dem Reformer oder dem Brenner zugeführten Materialgases zu erhöhen;
und
der Controller (25) ausgebildet ist, um, in einem Zündvorgangszeitraum, also einem Zeitraum, während dessen der Zünder (4) den Zündvorgang fortsetzt, zu bewirken, dass die Druckerhöhungseinrichtung (17) arbeitet, um das Materialgas durch die erste Gaszuführung (10) oder die zweite Gaszuführung (20) dem Brenner (2) zuzuführen, und zu bewirken, dass sich ein Öffnungsgrad des Volumenstromsteuer- bzw. -regelventils (18) von einem Anfangsöffnungsgrad Us zu einem Zielöffnungsgrad Uc vergrößert, der einem Zielmaterialvolumenstrom im Zündvorgangszeitraum entspricht, wobei der Anfangsöffnungsgrad Us kleiner als der Zielöffnungsgrad Uc ist, und
in einem Fall, in dem Zündung durch den Zündvorgang im Zündvorgangszeitraum nicht erfolgt ist, und ein nächster Zündvorgang ausgeführt wird, der Controller (25) ausgebildet ist, um den Anfangsöffnungsgrad Us des Volumenstromsteuer- bzw. - regelventils (18) im nächsten Zündvorgang auf einen letzten Öffnungsgrad Ue des Volumenstromsteuer- bzw. -regelventils in einem vorherigen Zündvorgangszeitraum einzustellen, und den nächsten Zündvorgang durch den Zünder (4) startet.

2. Wasserstoffgenerator nach Anspruch 1, der die erste Gaszuführung (10) umfasst, durch die das aus dem Reformer (1) abgelassene Gas dem Brenner (2) zugeführt wird, wobei
der Controller (25) ausgebildet ist, um, im Zündvorgangszeitraum des Zünders (4), zu bewirken, dass die Druckerhöhungseinrichtung (17) arbeitet, um das Materialgas durch die erste Gaszuführung (10) dem Brenner (2) zuzuführen.

3. Wasserstoffgenerator nach Anspruch 1, wobei der Controller (25) bewirkt, dass sich der Öffnungsgrad des Volumenstromsteuer- bzw. regelventils (18) vom Anfangsöffnungsgrad Us aus graduell vergrößert.

4. Wasserstoffgenerator nach Anspruch 1, wobei der Controller (25) bewirkt, dass sich der Öffnungsgrad des Volumenstromsteuer- bzw. -regelventils (18) vom Anfangsöffnungsgrad Us aus schrittweise vergrößert.

5. Wasserstoffgenerator nach Anspruch 1, wobei der Anfangsöffnungsgrad Us des Volumenstromsteuer- bzw. -regelventils (18) so eingestellt ist, dass eine Menge des dem Brenner (2) zugeführten Materialgases in Bezug auf eine Menge dem Brenner zugeführter Verbrennungsluft im Zündvorgangszeitraum geringer ist als eine Verbrennungsuntergrenze einer Konzentration des Materialgases.

6. Wasserstoffgenerator nach Anspruch 1, wobei in einem Fall, in dem der letzte Öffnungsgrad Ue des Volumenstromsteuer- bzw. -regelventils (18) im vorherigen Zündvorgang der Zielöffnungsgrad Uc geworden ist, der Controller (25) den Anfangsöffnungsgrad Us des Volumenstromsteuer- bzw. -regelventils im nächsten Zündvorgang auf den Zielöffnungsgrad Uc einstellt, und den nächsten Zündvorgang durch den Zünder (4) startet.

7. Brennstoffzellensystem, umfassend: den Wasserstoffgenerator nach einem der Ansprüche 1 bis 6; und eine Brennstoffzelle (6), die ausgebildet ist, um elektrische Energie mittels des durch den Wasserstoffgenerator erzeugten wasserstoffhaltigen Gases zu erzeugen.

8. Verfahren zum Betreiben eines Wasserstoffgenerators, umfassend: einen Reformer (1), der ausgebildet ist, um ein wasserstoffhaltiges Gas aus einem Materialgas durch eine Reformierungsreaktion zu erzeugen; einen Brenner (2), der ausgebildet ist, um den Reformer zu beheizen; eine erste Gaszuführung (10), durch die ein aus dem Reformer abgelassenes Gas dem Brenner zugeführt wird, oder eine zweite Gaszuführung (20), durch die das Materialgas dem Brenner zugeführt wird; einen Zünder (4), der ausgebildet ist, um einen Zündvorgang im Brenner auszuführen; eine Druckerhöhungseinrichtung (17), die ausgebildet ist, um Druck des dem Reformer oder dem Brenner zugeführten Materialgases zu erhöhen; und ein Volumenstromsteuer- bzw. - regelventil (18), das ausgebildet ist, um einen Volumenstrom des dem Reformer oder dem Brenner zugeführten Materialgases zu steuern bzw. zu regeln, wobei
in einem Zündvorgangszeitraum, also einem Zeitraum, während dessen der Zünder (4) den Zündvorgang fortsetzt, bewirkt wird, dass die Druckerhöhungseinrichtung (17) arbeitet, um das Materialgas durch die erste Gaszuführung (10) oder die zweite Gaszuführung (20) dem Brenner (2) zuzuführen, und bewirkt wird, dass sich ein Öffnungsgrad des Volumenstromsteuer- bzw. -regelventils (18) von einem Anfangsöffnungsgrad Us zu einem Zielöffnungsgrad Uc vergrößert, der einem Zielmaterialvolumenstrom im Zündvorgangszeitraum entspricht, wobei der Anfangsöffnungsgrad Us kleiner als der Zielöffnungsgrad Uc ist, und
in einem Fall, in dem Zündung durch den Zündvorgang im Zündvorgangszeitraum nicht erfolgt ist, und ein nächster Zündvorgang ausgeführt wird, der Anfangsöffnungsgrad Us des Volumenstromsteuer- bzw. -regelventils im nächsten Zündvorgang auf einen letzten Öffnungsgrad Ue des Volumenstromsteuer- bzw. -regelventils (18) in einem vorherigen Zündvorgangszeitraum eingestellt wird, und der nächste Zündvorgang durch den Zünder (4) gestartet wird.

9. Verfahren nach Anspruch 8, wobei der Öffnungsgrad des Volumenstromsteuer- bzw. -regelventils (18) vom Anfangsöffnungsgrad Us aus graduell vergrößert wird.

10. Verfahren nach Anspruch 8, wobei der Öffnungsgrad des Volumenstromsteuer- bzw. -regelventils (18) vom Anfangsöffnungsgrad Us aus schrittweise vergrößert wird.

11. Verfahren nach Anspruch 8, wobei der Anfangsöffnungsgrad Us des Volumenstromsteuer- bzw. -regelventils (18) so eingestellt wird, dass eine Menge des dem Brenner (2) zugeführten Materialgases in Bezug auf eine Menge dem Brenner zugeführter Verbrennungsluft im Zündvorgangszeitraum geringer ist als eine Verbrennungsuntergrenze einer Konzentration des Materialgases.

12. Verfahren nach Anspruch 8, wobei in einem Fall, in dem der letzte Öffnungsgrad Ue des Volumenstromsteuer- bzw. -regelventils (18) im vorherigen Zündvorgang der Zielöffnungsgrad Uc geworden ist, der Anfangsöffnungsgrad Us des Volumenstromsteuer- bzw. -regelventils im nächsten Zündvorgang auf den Zielöffnungsgrad Uc eingestellt wird, und der nächste Zündvorgang durch den Zünder (4) gestartet wird.

## Revendications

1. Générateur d'hydrogène comprenant : un reformeur (1) configuré pour générer un gaz contenant de l'hydrogène à partir d'un gaz matière première par réaction de reformage ; une chambre de combustion (2) configurée pour chauffer le reformeur ; un premier passage d'apport de gaz (10) par lequel un gaz émis par le reformeur est apporté à la chambre de combustion ou un second passage d'apport de gaz (20) par lequel le gaz matière première est apporté à la chambre de combustion ; un dispositif d'allumage (4) configuré pour réaliser une opération d'allumage dans la chambre de combustion ;
une soupape de régulation du débit (18) configurée pour réguler le débit du gaz matière première fourni au reformeur ou à la chambre de combustion ; et un dispositif de commande (25),
**caractérisé en ce que**
le générateur d'hydrogène comprend un dispositif d'augmentation de pression (17) configuré pour augmenter la pression du gaz matière première fourni au reformeur ou à la chambre de combustion ;
et
le dispositif de commande (25) est configuré pour, lors d'une période d'opération d'allumage consistant en une période durant laquelle le dispositif d'allumage (4) continue l'opération d'allumage, amener le dispositif d'augmentation de pression (17) à fonctionner pour apporter le gaz matière première par le premier passage d'apport de gaz (10) ou le second passage d'apport de gaz (20) à la chambre de combustion (2), et entraîner le degré d'ouverture de la soupape de régulation du débit (18) à augmenter, en passant d'un degré d'ouverture initial Us à un degré d'ouverture cible Uc en correspondance avec un débit de matière cible dans la période d'opération d'allumage, le degré d'ouverture initial Us étant inférieur au degré d'ouverture cible Uc, et
au cas où l'allumage ne s'est pas produit sous l'effet de l'opération d'allumage dans la période d'opération d'allumage, et qu'une opération d'allumage successive est entreprise, le dispositif de commande (25) est configuré pour régler le degré d'ouverture initial Us de la soupape de régulation du débit (18) lors de l'opération d'allumage successive sur le dernier degré d'ouverture Ue de la soupape de régulation du débit de la période d'opération d'allumage précédente, et il entame l'opération d'allumage successive grâce au dispositif d'allumage (4).

2. Générateur d'hydrogène selon la revendication 1, comprenant le premier passage d'apport de gaz (10) par lequel le gaz émis par le reformeur (1) est apporté à la chambre de combustion (2), dans lequel
le dispositif de commande (25) est configuré pour, dans la période d'opération d'allumage du dispositif d'allumage (4), amener le dispositif d'augmentation de pression (17) à fonctionner pour apporter le gaz matière première par le premier passage d'apport de gaz (10) à la chambre de combustion (2).

3. Générateur d'hydrogène selon la revendication 1, dans lequel le dispositif de commande (25) amène le degré d'ouverture de la soupape de régulation du débit (18) à augmenter de manière graduelle à partir du degré d'ouverture initial Us.

4. Générateur d'hydrogène selon la revendication 1, dans lequel le dispositif de commande (25) amène le degré d'ouverture de la soupape de régulation du débit (18) à augmenter à partir du degré d'ouverture initial Us de manière échelonnée.

5. Générateur d'hydrogène selon la revendication 1, dans lequel le degré d'ouverture initial Us de la soupape de régulation du débit (18) est réglé de manière que la quantité de gaz matière première fournie à la chambre de combustion (2) par rapport à la quantité d'air de combustion fournie à la chambre de combustion dans la période d'opération d'allumage soit inférieure à une limite inférieure de combustion de la concentration du gaz matière première.

6. Générateur d'hydrogène selon la revendication 1, dans lequel, au cas où le dernier degré d'ouverture Ue de la soupape de régulation du débit (18) lors de l'opération d'allumage précédente a atteint le degré d'ouverture cible Uc, le dispositif de commande (25) règle le degré d'ouverture initial Us de la soupape de régulation du débit lors de l'opération d'allumage successive sur le degré d'ouverture cible Uc, et entame l'opération d'allumage successive grâce au dispositif d'allumage (4).

7. Système de pile à combustible comprenant : le générateur d'hydrogène selon l'une quelconque des revendications 1 à 6 ; et une pile à combustible (6) configurée pour générer de l'électricité au moyen du gaz contenant de l'hydrogène généré par le générateur d'hydrogène.

8. Procédé de fonctionnement d'un générateur d'hydrogène comprenant : un reformeur (1) configuré pour générer un gaz contenant de l'hydrogène à partir d'un gaz matière première par réaction de reformage ; une chambre de combustion (2) configurée pour chauffer le reformeur ; un premier passage d'apport de gaz (10) par lequel un gaz émis par le reformeur est apporté à la chambre de combustion ou un second passage d'apport de gaz (20) par lequel le gaz matière première est apporté à la chambre de combustion ; un dispositif d'allumage (4) configuré pour réaliser une opération d'allumage dans la chambre de combustion ; un dispositif d'augmentation de pression (17) configuré pour augmenter la pression du gaz matière première fourni au reformeur ou à la chambre de combustion ; et une soupape de régulation du débit (18) configurée pour commander le débit du gaz matière première fourni au reformeur ou à la chambre de combustion, dans lequel
lors d'une période d'opération d'allumage, consistant en une période durant laquelle le dispositif d'allumage (4) continue l'opération d'allumage, le dispositif d'augmentation de pression (18) est amené à fonctionner pour apporter le gaz matière première par le premier passage d'apport de gaz (10) ou le second passage d'apport de gaz (20) à la chambre de combustion (2), et un degré d'ouverture de la soupape de régulation du débit (18) est amené à augmenter, passant d'un degré d'ouverture initial Us à un degré d'ouverture cible Uc en correspondance avec un débit de matière cible dans la période d'opération d'allumage, le degré d'ouverture initial Us étant inférieur au degré d'ouverture cible Uc, et
au cas où l'allumage ne s'est pas produit sous l'effet de l'opération d'allumage dans la période d'opération d'allumage, et qu'une opération d'allumage successive est entreprise, le degré d'ouverture initial Us de la soupape de régulation du débit lors de l'opération d'allumage successive est réglé sur le dernier degré d'ouverture Ue de la soupape de régulation du débit (18) de la période d'opération d'allumage précédente, et l'opération d'allumage successive est entamée par le dispositif d'allumage (4).

9. Procédé selon la revendication 8, dans lequel le degré d'ouverture de la soupape de régulation du débit (18) augmente graduellement à partir du degré d'ouverture initial Us.

10. Procédé selon la revendication 8, dans lequel le degré d'ouverture de la soupape de régulation du débit (18) augmente à partir du degré d'ouverture initial U de manière échelonnée.

11. Procédé selon la revendication 8, dans lequel le degré d'ouverture initial Us de la soupape de régulation du débit (18) est réglé de manière que la quantité de gaz matière première fournie à la chambre de combustion (2) par rapport à la quantité d'air de combustion fournie à la chambre de combustion dans la période d'opération d'allumage soit inférieure à une limite inférieure de combustion de la concentration du gaz matière première.

12. Procédé selon la revendication 8, dans lequel au cas où le dernier degré d'ouverture Ue de la soupape de régulation du débit (18) lors de l'opération d'allumage précédente a atteint le degré d'ouverture cible Uc, le degré d'ouverture initial Us de la soupape de régulation du débit lors de l'opération d'allumage successive est réglé sur le degré d'ouverture cible Uc, et l'opération d'allumage successive est entamée par le dispositif d'allumage (4).
